# FASCICULE DE BREVET EUROPEEN

(11) **EP 0 568 462 B1**
(45) Date de publication et mention de la délivrance du brevet: **27.11.1996**
(21) Numéro de dépôt: 93401127.1
(22) Date de dépôt: 30.04.1993
(51) Int. Cl.: B60S 1/34

(54) **Dispositif de lave-glace, notamment pour surface vitrée de véhicule automobile**
Scheibenwaschanlage, insbesondere für Kraftfahrzeugscheibenoberfläche
Window washing device, in particular for the glazed surfaces of a motor vehicle

(30) Priorité: 30.04.1992 FR 9205369
(43) Date de publication de la demande: 03.11.1993
(73) Titulaire: VALEO SYSTEMES D'ESSUYAGE, 78321 La Verrière (FR)
(72) Inventeur: Morin, Pascal, F-86100 Chatellerault (FR)
(74) Mandataire: Gamonal, Didier

(56) Documents cités:
- EP-A- 0 207 364
- WO-A-90/10563
- DE-A- 3 632 734

## Description

La présente invention se rapporte à un dispositif de lave-glace, notamment pour véhicule automobile.

Il est déjà connu des dispositifs de lave-glace dans lesquels un arbre de commande creux, soumis à un mouvement de rotation alternatif par un élément menant, comporte un alésage débouchant aux deux extrémités de l'arbre, l'une des extrémités étant reliée à un dispositif de projection d'un liquide de lave-glace sur une surface vitrée, telle qu'un pare-brise de véhicule automobile, et l'autre des extrémités s'érigeant axialement à l'intérieur d'une pièce de raccordement fixe, en forme de pot, munie d'une tubulure d'admission raccordée par une conduite souple à un circuit de lave-glace, généralement constituée d'une pompe de lave-glace et d'un bocal de lave-glace.

Comme cela est connu, notamment par le document FR-A-2 497 745, l'arbre de commande fait partie d'un groupe de commande d'essuyage généralement constitué d'un moto-réducteur. Ce moto-réducteur comporte un moteur électrique associé à un carter portant un ensemble réducteur permettant de générer à l'arbre de sortie un mouvement de rotation alternatif en transférant, tout en l'augmentant, le couple généré par le moteur audit arbre de sortie par le système réducteur qui sert alors d'élément menant de l'arbre de sortie.

Cet arbre de sortie, servant d'arbre de commande du bras d'essuie-glace, est supporté par deux paliers situés à distance l'un de l'autre et disposés dans un support de palier s'érigeant axialement à partir du fond du carter de réducteur et à l'opposé du couvercle de fermeture que présente ce carter.

Cet arbre de sortie est relié à l'une de ses extrémités au bras d'essuie-glace et traverse, à l'autre de ses extrémités, le couvercle de fermeture pour pénétrer, à étanchéité, dans une pièce de raccordement en forme de pot reposant de manière fixe sur le couvercle de fermeture de l'ensemble réducteur.

Selon le document susmentionné, une première étanchéité est assurée entre l'arbre de sortie et le couvercle par une bague d'étanchéité portée par ledit couvercle et une deuxième étanchéité est assurée entre le pot et l'arbre de sortie par une bague d'étanchéité portée par ledit arbre.

Il est également connu, notamment par le document USA-A-3 887 956 un dispositif de lave-glace constitué d'un arbre de commande creux supporté par deux paliers situés à distance l'un de l'autre et disposés dans un support de palier fixé par tous moyens connus sur un élément fixe de la carrosserie du véhicule automobile.

Cet arbre est relié fixement à l'une de ses extrémités à un bras d'essuie-glace auquel est raccordé un balai d'essuie-glace apte à balayer la surface vitrée sur laquelle est projeté le liquide de lave-glace, et porte à l'autre de ses extrémités un élément menant, tel qu'une bielle de commande reliée fixement audit arbre et faisant partie d'un mécanisme de commande d'essuie-glace constitué par exemple d'un moteur électrique associé à un système de bielles et de manivelles.

Dans ce document, l'arbre de commande est connecté au circuit de lave-glace par introduction de l'extrémité opposée à celle portant le bras dans une pièce de raccordement de forme générale en L fixe par rapport à l'arbre.

Ces dispositifs de l'Art Antérieur présentent néanmoins certains inconvénients non négligeables pouvant entraver gravement leur fonctionnement.

En effet, dans ces dispositifs, une grande portion d'arbre est nécessaire entre l'extrémité de l'arbre pénétrant dans le pot et le palier situé le plus proche du pot, portion qui est nécessaire pour la mise en place de l'élément menant, soit la bielle, soit le train d'engrenage du système réducteur.

Pour assurer un bon fonctionnement de ces systèmes, il est nécessaire que l'étanchéité entre l'arbre et le pot soit effective de manière constante, en fonctionnement et même après une longue période d'utilisation.

La Demanderesse a pu constater que, en fonctionnement, la portion de l'arbre située entre le palier le plus près de l'élément menant et le pot était en porte-à-faux et était soumise à un effort radial résultant de l'élément menant.

Cet effort radial avait pour conséquence de faire fléchir cette portion d'arbre et, conséquemment, l'extrémité de l'arbre introduite dans la pièce de raccordement fixe et il en résultait ainsi un mouvement excentré de l'extrémité de l'arbre dans le pot qui provoquait des fuites au niveau de l'étanchéité entre le pot et cet arbre.

De plus, ce mouvement en excentrique entraînait une usure non régulière des joints d'étanchéité qui, dans le temps, se concrétisait par des fuites de liquide de lave-glace au niveau de l'étanchéité entre l'arbre et le pot.

La présente invention se propose de remédier au problème en présentant un dispositif de lave-glace de conception très simple qui ne complique pas les dispositifs existants tout en assurant une étanchéité parfaite, même avec de grands couples appliqués à l'arbre de sortie.

Pour cela, selon l'invention, un dispositif de lave-glace, notamment pour surface vitrée de véhicule automobile, comportant un arbre de commande creux soumis à un mouvement de rotation alternative par l'intermédiaire d'une élément menant, ledit arbre étant porté par des paliers supportés par un support de palier, l'une des extrémités dudit arbre pénétrant à étanchéité dans une pièce de raccordement fixée sur une partie fixe ou réaliseé en une seule pièce avec une partie fixe (Dispositif du type divulgué dans US-A-3 887 956), est caractérisé en ce que l'un des paliers est logé entre l'élément menant et la pièce de raccordement.

Grâce à l'invention, l'effort radial appliqué par l'élément menant sur l'arbre de commande est directement absorbé par ce palier et, de ce fait, aucune excentration de la partie d'extrémité de cet arbre dans le pot n'en résulte.

Suivant un mode de réalisation de l'invention, le palier présente une surface d'appui pour l'élément menant.

Suivant un autre mode de réalisation de l'invention le palier est porté par la pièce de raccordement.

Suivant un autre mode de réalisation de l'invention, la pièce de raccordement comporte un logement pour le palier.

Suivant un autre mode de réalisation de l'invention, la pièce de raccordement comporte une cavité apte à recevoir un joint d'étanchéité.

Suivant un autre mode de réalisation de l'invention, le palier comporte une surface de butée pour un joint d'étanchéité.

Suivant un autre mode de réalisation de l'invention, la pièce de raccordement est portée par un couvercle que présente un ensemble moto-réducteur.

Suivant un autre mode de réalisation de l'invention, l'élément de raccordement est porté par une cloison fixe issue de la carrosserie automobile.

Suivant un autre mode de réalisation de l'invention, la cloison fixe est issue du support de palier.

Suivant un autre mode de réalisation de l'invention, la pièce de raccordement est en forme de pot comportant une collerette d'appui.

Les autres caractéristiques et avantages de l'invention vont ressortir maintenant de la description qui va suivre en se référant aux dessins annexés sur lesquels :
- la figure 1 est une vue en coupe schématique d'un dispositif de lave-glace selon la présente invention ;
- la figure 2 est une vue à plus grande échelle d'un détail de réalisation de la figure 1 ;
- la figure 3 montre une variante de réalisation de l'invention.

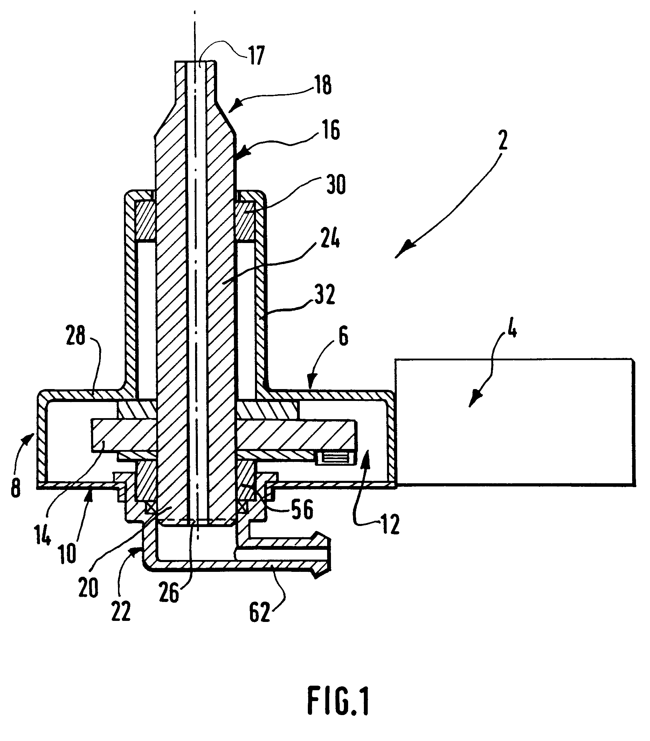

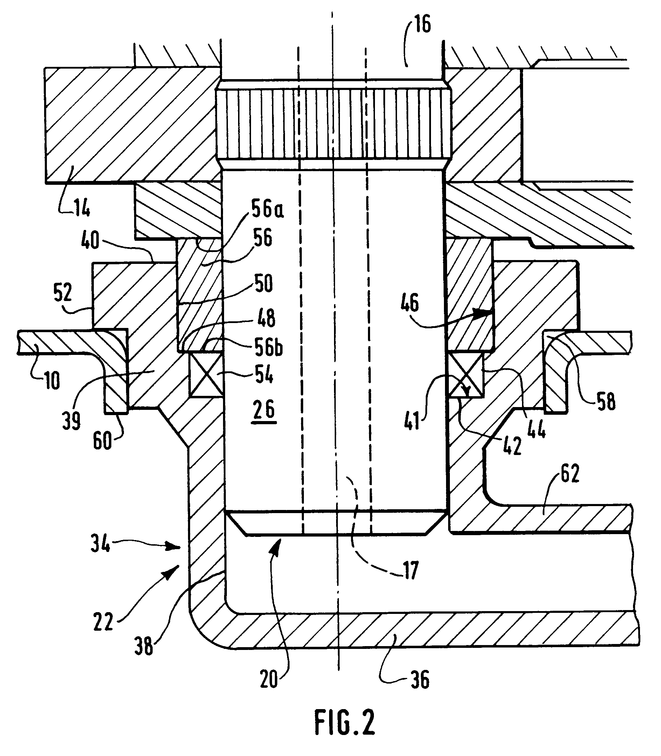

En se référant conjointement aux figures 1 et 2, un ensemble moto-réducteur 2 est constitué d'un moteur électrique 4 et d'un réducteur 6 constitué d'un carter de réducteur 8 fermé par un couvercle de fermeture 10.

A l'intérieur de ce carter est logé un système de réduction 12 qui, de manière connue en soi, peut être constitué d'un train d'engrenage ou d'un système bielle/manivelle.

Pour des raisons de simplification de la description qui va suivre, l'on considère que le système de réduction incorporé dans le carter de réducteur est un système bielle/manivelle dont on n'a représenté que la manivelle 14.

Cette manivelle 14 est reliée de manière fixe à un arbre de sortie 16, ou arbre de commande, en servant pour cet arbre d'élément menant.

L'arbre creux 16, muni d'un alésage longitudinal 17, est relié à l'une 18 de ses extrémités à un bras d'essuie-glace (non représenté) portant un balai d'essuie-glace apte à frotter sur une surface vitrée telle qu'un pare-brise de véhicule automobile, alors que l'autre 20 de ses extrémités est apte à pénétrer à l'intérieur d'une pièce de raccordement 22 à un circuit de lave-glace.

Ainsi, l'arbre de commande 16 peut être divisé en deux parties, une première partie, dite partie de liaison entre la manivelle 14 et l'extrémité 18, et une deuxième partie, dite partie entraînée, entre la manivelle et la pièce de raccordement 22.

Dans sa partie liaison 24, l'arbre de commande 16 traverse le fond 28 du carter 8 de réducteur en étant guidé par un palier 30 supporté par un support de palier 32 s'élevant radialement à l'extérieur du fond du carter tout en faisant partie de celui-ci.

Dans sa partie entraînée 26, l'arbre de commande 16 traverse le couvercle de fermeture 10 pour aboutir dans la pièce de raccordement 22.

En se référant, en plus, à la figure 2, la pièce de raccordement 22 , ici en forme de pot, présente une partie tubulaire 34, de diamètre interne sensiblement égal au diamètre externe de l'arbre de commande 16 en étant délimité par une paroi de fond 36 et une paroi latérale 38, cette partie tubulaire 34 se poursuit de manière monobloc en direction axiale et dans la partie supérieure du pot, celle considérée en haut de la figure 2, par une partie annulaire 39 de plus grand diamètre extérieur que le diamètre extérieur de la partie tubulaire 34 et de diamètre intérieur sensiblement égale au diamètre intérieur de ladite partie tubulaire et se finissant par une face terminale 40 sensiblement parallèle au fond 36.

Cette partie annulaire porte une cavité 41 ouverte en direction de la partie évidée que présente la partie annulaire 39, cette cavité est délimitée par un épaulement 42 sensiblement parallèle et à distance du fond 36 et par une paroi interne latérale 44 de plus grand diamètre que le diamètre interne de la partie tubulaire 38. Cette cavité se prolonge, également en direction axiale et de manière coaxiale, par un logement 46, également ouvert en direction de la partie évidée de la partie tubulaire 34, ce logement étant délimité par une face horizontale 48 sensiblement parallèle et à distance du fond 36 et par une paroi latérale 50 de plus grand diamètre que la paroi tubulaire 38.

Finalement, la partie annulaire 39 porte une collerette radiale extérieurement 52, dite collerette d'appui, à deux faces planes horizontales dont la face horizontale supérieure est confondue avec la face terminale 40 de la partie annulaire 39 et dont la face horizontale inférieure se situe à un niveau sensiblement médian de ladite partie annulaire.

Ainsi, la partie tubulaire 34 est apte à recevoir l'extrémité 20 de l'arbre creux 16, la cavité 41 reçoit un joint d'étanchéité 54 et le logement 46 reçoit, de manière fixe, un palier 56 qui présente un diamètre intérieur sensiblement égal au diamètre, au jeu de fonctionement près, au diamètre extérieur de l'arbre 16 dans la zone considérée de l'assemblage, un diamètre extérieur au moins égal au diamètre de la paroi 50 et deux surfaces sensiblement horizontales 56a, 56b dont l'une 56b prend appui en partie sur la face horizontale du logement 46 et dont l'autre 56a se situe à une hauteur au moins plus grande que la hauteur considérée entre la face terminale 40 de la partie annulaire 39 et la face 48 du logement 46.

Avantageusement et comme cela est visible sur la figure 2, le palier 56 est logé entre l'élément menant 14 et le pot 22 et plus particulièrement entre la manivelle 14 et le joint d'étanchéité 54.

Plus précisément encore le palier 56 est situé dans le plan du couvercle 10.

Bien entendu et cela sans sortir du cadre de l'invention, il peut être prévu que le palier 56 soit logé au voisinage de l'extrémité 20 en étant, par exemple, surmoulé par le pot.

De plus, la surface 56a de la bague 56 sert de surface d'appui pour l'élément menant 14 et la surface 56b sert de surface de butée axiale du joint d'étanchéité 54.

En pratique, et comme cela a déjà été mentionné, le pot 22 est apte à être monté et fixé sur le couvercle 10 qui présente, en conséquence, une ouverture 58 munie d'un rebord 60 saillant à l'extérieur du couvercle, cette ouverture ayant une forme complémentaire à la forme extérieure du pot 22.

Dans l'exemple considéré, le pot 22 est emmanché à force à travers l'ouverture 58 de manière à ce que sa collerette 52 prenne appui sur la face interne du couvercle 10, que la partie annulaire 39 se trouve en majeure partie dans la région du rebord 60, et que la partie tubulaire 34 fasse saillie à l'extérieur du couvercle 10.

Lors du montage sur l'ensemble moto-réducteur, l'arbre 16 n'est supporté que par le palier 30 et se trouve dans la position représentée à la figure 1.

Le couvercle 10 est apte à être rapporté sur la face ouverte du carter 8 en faisant coïncider l'extrémité 20 de l'arbre 16, dans un premier temps, avec le palier 56, puis en appliquant un mouvement axial dans la direction du palier 30, au pot 22, relié de manière fixe au couvercle 10, l'extrémité 20 de l'arbre 16 va glisser le long de ce palier puis traverser le joint d'étanchéité 54 pour aboutir dans la partie tubulaire 34 dudit pot.

Arrivé dans cette position, il suffit de fixer, par exemple par vissage, le couvercle sur le carter pour obtenir la réalisation selon la figure 2.

Dans cette position, l'arbre de commande 16, et plus particulièrement le canal 17 qu'il porte, est en communication avec le liquide de lave-glace amené dans la partie tubulaire 34 par une tubulure 62 que présente le pot 22 et les efforts radiaux générés en fonctionnement par la manivelle 14 sur la partie entraînée 26 sont encaissés directement par le palier 56 et retransmis au couvercle fixe 10 par l'intermédiaire de la partie annulaire 39, ce qui se concrétise en final par aucun mouvement de flexion de ladite partie entraînée et plus particulièrement au niveau du joint d'étanchéité 54.

De plus, l'arbre creux 16 est immobilisé en translation axiale pour l'appui de l'élément menant 14 d'une part sur le fond 28 du carter 8 et d'autre part sur la surface 56a du palier 56.

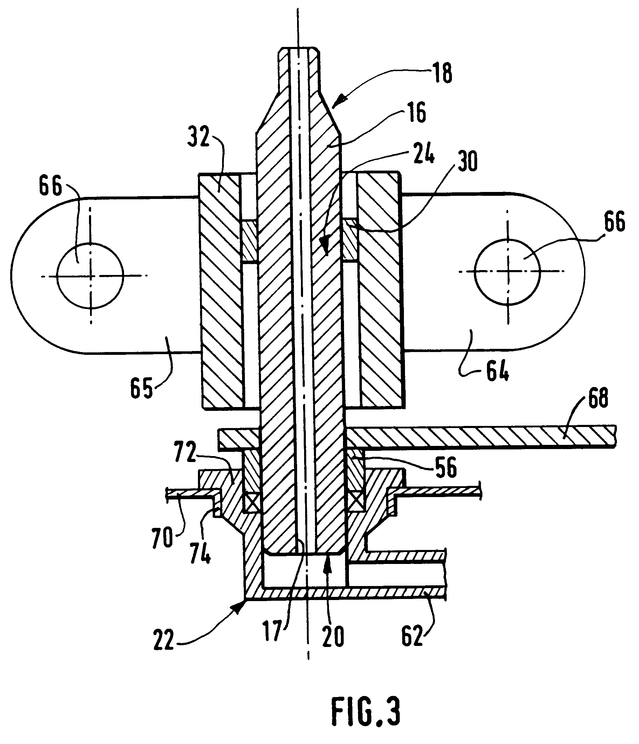

On se réfère maintenant à la figure 3 qui montre une variante de réalisation de l'invention.

Dans cette variante, l'arbre creux de commande 16 muni de son canal 17 ne fait pas partie d'un ensemble moto-réducteur mais d'un mécanisme de transmission de mouvement rotatif alternatif tels que celui constitué par un moto-réducteur entraînant ledit arbre par un système de bielle/manivelle bien connu de l'Art Antérieur.

Comme visible sur la figure 3, l'arbre 16 est guidé au voisinage de son extrémité 18 et plus particulièrement dans sa partie de liaison 24 par un palier 30 supporté par un support de palier 32 fixe qui, contrairement à l'exemple décrit précédemment, présente au moins une oreille de fixation, ici deux oreilles 64, 65 saillantes extérieurement et munie chacune d'un alésage 66 apte à recevoir tout moyen de fixation tel qu'une vis pour une liaison fixe et inamovible sur une partie fixe de la carrosserie automobile.

Cet arbre 16 est entraîné en un mouvement de rotation alternatif par le système bielle/manivelle, et plus particulièrement par la bielle 68, formant ici élément menant, qui est reliée de manière fixe en rotation avec ledit arbre.

L'extrémité 20 de l'arbre 16 est apte à être reçue dans un pot 22 sensiblement identique à celui décrit précédemment, à la différence selon laquelle ce pot est supporté par une cloison fixe 70, par exemple issue d'une partie fixe de la carrosserie ou faisant partie de cette carrosserie ou issue du support de palier 32, en étant maintenu et fixé à celle-ci à travers une ouverture 72 munie d'un rebord 74 que présente cette cloison.

Comme précédemment décrit, ce pot comporte le joint d'étanchéité 54, le palier 56 et reçoit à travers le palier et le joint d'étanchéité l'extrémité 20 de l'arbre de manière à ce que celui-ci aboutisse dans la partie tubulaire 34.

Grâce à ces dispositions, l'arbre de commande 16, et plus particulièrement le canal 17 qu'il porte, est en communication avec le liquide de lave-glace amené dans la partie tubulaire 34 par la tubulure 62 que présente le pot et les efforts radiaux générés en fonctionnement par la bielle 68 sur la partie entraînée 26 sont encaissés directement par le palier 56 et retransmis à la cloison fixe 70 par l'intermédiaire de la partie annulaire 39.

Dans les exemples de réalisation montrés aux figures 1, 2 et 3, le palier 56 sert de butée en translation axiale pour l'arbre 16, par appui de l'élément menant, soit la manivelle 14, soit la bielle 68, sur la face horizontale supérieure dudit palier.

De plus, il peut être constaté que la mise en place du joint d'étanchéité 54 se fera d'une manière aisée puisque la cavité 41 est également ouverte en direction du logement 46, grâce à quoi le joint pourra être mis en place par un simple mouvement de translation axiale en direction du fond du pot 22 et immobilisé par la suite, en translation axiale, par la surface 56b du palier 56.

Bien entendu, la présente invention n'est pas limitée aux exemples de réalisations décrits mais englobe toutes autres variantes.

Notamment, il peut être envisagé que le pot 22 et le couvercle 10 ou la cloison fixe 70 soient en une seule pièce ou bien il peut être envisagé que le pot 22 soit surmoulé sur le couvercle ou la cloison fixe.

## Revendications

1. Dispositif de lave-glace, notamment pour surface vitrée de véhicule automobile, comportant un arbre creux (16) porté par des paliers supportés par un support de palier (32) et soumis à un mouvement de rotation alternatif par l'intermédiaire d'un élément menant (14,68),l'une des extrémités dudit arbre pénétrant à étanchéité dans une pièce de raccordement (22) fixée sur une partie fixe (10,70) ou réalisée en une seule pièce avec une partie fixe (10,70), caractérisé en ce que l'un (56) des paliers est logé entre l'élément menant (14,68) et la pièce de raccordement (22).

2. Dispositif de lave-glace selon la revendication 1, caractérisé en ce que le palier (56) présente une surface d'appui (56a) pour l'élément menant (14,68).

3. Dispositif de lave-glace selon la revendication 1 ou 2, caractérisé en ce que le palier (56) est porté par la pièce de raccordement (22).

4. Dispositif de lave-glace selon la revendication 3, caractérisé en ce que la pièce de raccordement (22) comporte un logement (46) pour le palier (56).

5. Dispositif de lave-glace selon l'une des revendications 3 et 4, caractérisé en ce que la pièce de raccordement (22) comporte une cavité (41) apte à recevoir un joint d'étanchéité (54).

6. Dispositif de lave-glace selon l'une des revendications 3 à 5, caractérisé en ce que le palier (56) comporte une surface de butée (56a) pour un joint d'étanchéité (54).

7. Dispositif de lave-glace selon l'une des revendications précédentes, caractérisé en ce que la pièce de raccordement (22) est portée par un couvercle (10) que présente un ensemble moto-réducteur (2).

8. Dispositif de lave-glace selon l'une des revendications 1 à 7, dans lequel le support de palier (32) est porté par un élément fixe de la carrosserie, caractérisé en ce que l'élément de raccordement (22) est porté par une cloison fixe (70) issue de la carrosserie automobile.

9. Dispositif de lave-glace selon la revendication 8, caractérisé en ce que la cloison fixe (22) est issue du support de palier (32).

10. Dispositif de lave-glace selon l'une des revendications précédentes, caractérisé en ce que la pièce de raccordement (22) est en forme de pot comportant une collerette d'appui (52).

## Claims

1. Screen washer device, notably for a glazed surface on a motor vehicle, having a hollow shaft (16) carried by bearings supported by a bearing support (32) and subjected to an alternating rotation movement by means of a driving member (14, 68), one of the ends of the said shaft sealingly entering a connecting piece (22) fixed to a fixed part (10, 70) or produced in a single piece with a fixed part (10, 70), characterised in that one (56) of the bearings is housed between the driving member (14, 68) and the connecting piece (22).

2. Screen washer device according to Claim 1, characterised in that the bearing (56) has a bearing surface (56a) for the driving member (14, 68).

3. Screen washer device according to Claim 1 or 2, characterised in that the bearing (56) is carried by the connecting piece (22).

4. Screen washer device according to Claim 3, characterised in that the connecting piece (22) has a housing (46) for the bearing (56).

5. Screen washer device according to one of Claims 3 and 4, characterised in that the connecting piece (22) has a cavity (41) able to receive a sealing joint (54).

6. Screen washer device according to one of Claims 3 to 5, characterised in that the bearing (56) has an abutment surface (56a) for a sealing joint (54).

7. Screen washer device according to one of the preceding claims, characterised in that the connecting piece (22) is carried by a cover (10) on a geared motor unit (2).

8. Screen washer device according to one of Claims 1 to 7, in which the bearing support (32) is carried by a fixed element of the bodywork, characterised in that the connecting element (22) is carried by a fixed partition (70) coming from the motor vehicle bodywork.

9. Screen washer device according to Claim 8, characterised in that the fixed partition (22) comes from the bearing support (32).

10. Screen washer device according to one of the preceding claims, characterised in that the connecting piece (22) is in the form of a pot having a bearing collar (52).

## Patentansprüche

1. Scheibenwaschanlage, insbesondere für eine Kraftfahrzeugscheibenoberfläche, umfassend eine hohle Antriebswelle (16), die in Lagern gelagert ist, die an einem Lagerträger (32) angebracht sind, und auf die über ein treibendes Element (14, 68) eine Pendeldrehbewegung einwirkt, wobei eines der Enden der besagten Antriebswelle dicht in ein Anschlußstück (22) eingreift, das an einem ortsfesten Teil (10, 70) befestigt oder einstückig mit einem ortsfesten Teil (10,70) ausgeführt ist , **dadurch gekennzeichnet,** daß eines (56) der Lager zwischen dem treibenden Element (14, 68) und dem Anschlußstück (22) angeordnet ist.

2. Scheibenwaschanlage nach Anspruch 1, **dadurch gekennzeichnet,** daß das Lager (56) eine Auflagefläche (56a) für das treibende Element (14, 68) aufweist.

3. Scheibenwaschanlage nach Anspruch 1 oder 2 , **dadurch gekennzeichnet,** daß das Lager (56) am Anschlußstück (2) angebracht ist.

4. Scheibenwaschanlage nach Anspruch 3, **dadurch gekennzeichnet,** daß das Anschlußstück (22) eine Aufnahme (46) für das Lager (56) umfaßt.

5. Scheibenwaschanlage nach einem der Ansprüche 3 und 4 , **dadurch gekennzeichnet,** daß das Anschlußstück (22) eine Austiefung (41) für das Einsetzen einer Dichtung (54) umfaßt.

6. Scheibenwaschanlage nach einem der Ansprüche 3 bis 5 , **dadurch gekennzeichnet,** daß das Lager (56) eine Anschlagfläche (56a) für eine Dichtung (54) umfaßt.

7. Scheibenwaschanlage nach einem der vorangehenden Ansprüche, **dadurch gekennzeichnet**, daß das Anschlußstück (22) an einem Deckel (10) angebracht ist, den eine Wischerantriebseinheit (2) aufweist.

8. Scheibenwaschanlage nach einem der Ansprüche 1 bis 7, bei dem der Lagerträger (32) an einem ortsfesten Element der Karosserie angebracht ist , **dadurch gekennzeichnet,** daß das Anschlußelement (12) an einer Zwischenwand (70) angebracht ist, die aus der Karosserie des Kraftfahrzeugs herausgearbeitet ist.

9. Scheibenwaschanlage nach Anspruch 8, **dadurch gekennzeichnet,** daß die ortsfeste Zwischenwand (22) aus dem Lagerträger (32) herausgearbeitet ist.

10. Scheibenwaschanlage nach einem der vorangehenden Ansprüche, **dadurch gekennzeichnet**, daß das Anschlußstück (22) in Form eines Topfes ausgeführt ist, der einen Auflagebund (52) umfaßt.
